# EUROPEAN PATENT APPLICATION

(11) **EP 4 769 501 A1**
(43) Date of publication of application: **01.07.2026**
(21) Application number: 25848744.6
(22) Date of filing: 09.07.2025
(51) Int. Cl.: H01M 4/04, H01M 4/76, B05C 5/02, B05C 11/10, H01M 4/02

(54) **ELECTRODE, MANUFACTURING METHOD THEREFOR, AND SLOT DIE FOR COATING ACTIVE MATERIAL**

(30) Priority: 29.07.2024 KR 20240100538
(71) Applicant: LG Energy Solution, Ltd., Seoul 07335 (KR)
(72) Inventor: YOON, Tae Keon, Daejeon 34122 (KR)
(74) Representative: Goddar, Heinz J.
(86) International application number: PCT/KR2025/010029
(87) International publication number: WO 2026/029419

(57) **Abstract**

The present invention relates to a slot die coating an active material layer on a foil, an electrode manufacturing method using the same to manufacture an electrode, and an electrode manufactured using the same. According to the present invention, the slot die is configured to move in the width direction relatively with respect to the foil.

## Description

### [TECHNICAL FIELD]

This application claims the benefit of priority based on Korean Patent Application No. 10-2024-0100538 filed on July 29, 2024, and entire contents disclosed in the document of the patent application are included as a part of this specification.

The present invention relates to a slot die coating an active material layer on a foil, an electrode manufacturing method using the same to manufacture an electrode, and an electrode manufactured using the same.

### [BACKGROUND ART]

Secondary batteries having high application ability and electric characteristics, such as high energy density and the like, according to product groups are generally applied not only to portable devices, but also electric vehicles (EVs) or hybrid electric vehicles (HEVs) driven by electric driving sources.

These secondary batteries are gaining attention as a new energy source for enhancing eco-friendliness and energy efficiency, not only due to a primary advantage of being able to drastically reduce the use of fossil fuels, but also due to the fact that no by-products are generated from energy use.

Examples of kinds of secondary batteries that are currently widely used include lithium-ion batteries, lithium polymer batteries, nickel-cadmium batteries, nickel-hydrogen batteries, nickel-zinc batteries, and the like. The of such a unit secondary battery cell, i.e., a unit battery cell, is approximately in the rage of 2.5V to 4.5V. Thus, when a higher output voltage than this is required, a battery pack may be configured by connecting a plurality of battery cells in series. Also, the battery pack may be configured by connecting a plurality of battery cells in parallel based on charging and discharging capacity required for the battery pack. Accordingly, the number of battery cells included in the battery pack and the configuration of their electrical connection may be variously set based on a required output voltage and/or charging and discharging capacity.

Meanwhile, known types of unit secondary battery cells include cylindrical, prismatic, and pouch-type battery cells. Among these, a pouch-type battery generally includes a stacked-type electrode assembly in which a plurality of electrodes cut to have a constant width are stacked with separators interposed therebetween. Each electrode includes a foil made of metal, and active material layers applied on both surfaces of the foil.

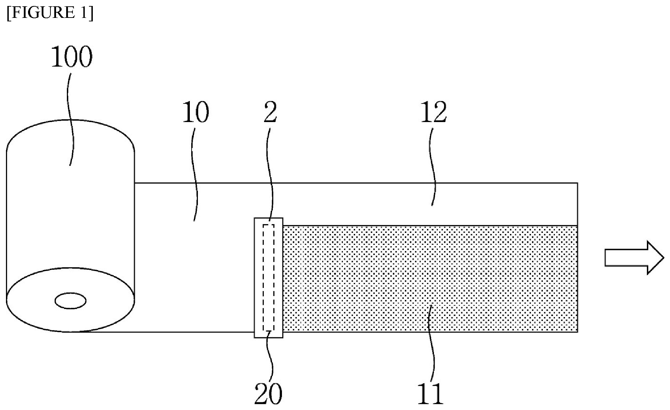

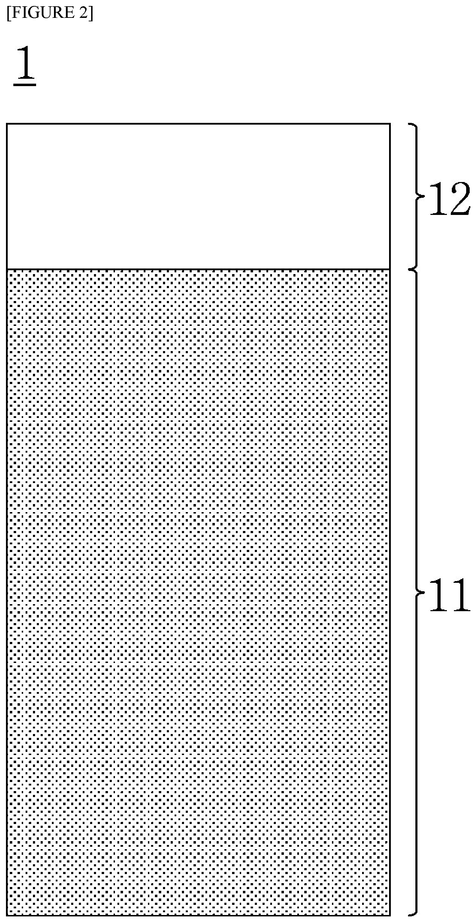

FIG. 1 illustrates a state in which a slot die coats an active material layer on a foil, and FIG. 2 illustrates an electrode formed by slitting the foil of FIG. 1. Referring to these drawings, the electrode 1 is formed by applying active material slurry discharged from the slot die 2 onto both surfaces of the foil 10, which is unwound and continuously fed from a foil roll 100, to coat active material layers 11, and then slitting the coated foil at predetermined intervals in the length direction.

At this time, the active material layer 11 is not coated over the entire surface of the foil 10, and a non-coated region 12 having no active material slurry coated thereon is formed along one end portion in the width direction of the foil. The non-coated region 12 later undergoes a notching process to form a tab for electrically connecting each electrode 1 with a terminal.

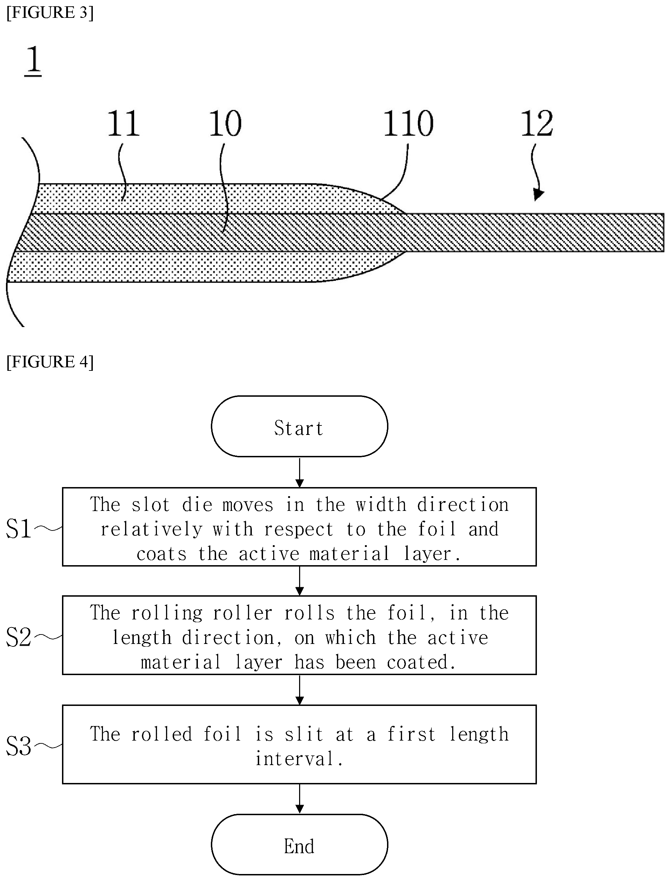

FIG. 3 is a cross-sectional view showing an enlarged view of the end portion of the active material layer alongside the non-coated region in the electrode of FIG. 2. Referring back to FIG. 1 along with this, sliding portions 110 may be formed at regions in the active material layer 11 corresponding to both end portions in the length direction of the slot die 2 due to the flow of the active material slurry. This sliding phenomenon is one in which the thickness of the active material layer 11 gradually becomes thinner toward its end portion, making the coating surface area and thickness of the active material layer 11 non-uniform. Such non-uniformity negatively affects the charge and discharge efficiency and stability of the whole battery.

Also, in general, the active material layer 11 coated on the foil 10 as described above is flattened through a rolling step, but the sliding portion 110, which is formed to have a smaller thickness than the remaining portion, cannot be properly pressurized during the rolling process and cannot be flattened with the remaining portion.

In addition, when the coating surface area and thickness of the active material layer 11 are not uniform, the adhesion between the separator and the electrode 1, which results from the binder contained in the active material slurry and the binder coated on the surface of the separator, may be weakened. Because of this, the fixing force between the electrode 1 and the separator may become weakened, and the structural stability of the electrode assembly may be significantly degraded. Particularly, in the case where the fixing force between the electrode 1 and the separator is weak around the non-coated region in which the tab is prepared, there is a high possibility that the active material layer 11 is readily exposed to the outside and comes into contact with the tab, thereby causing a short circuit. When a short circuit occurs in the electrode assembly, this may lead to explosion or ignition, and so, it can be said that this is a very serious risk in terms of battery safety.

### [DISCLOSURE]

### [TECHNICAL PROBLEM]

The present invention has been conceived under the background of the related art as described above, and is to provide an electrode structure and a method of manufacturing the same, in which the thickness and coating surface area of the active material layer are uniform, thereby achieving stable charge and discharge performance.

The present invention is also to provide an electrode manufacturing method in which the non-uniformity in the rolling caused by the sliding phenomenon is prevented.

Another technical object of the present invention is to provide an electrode structure and a method of manufacturing the same which improve the adhesion between the separator and the electrode and prevent the short circuit.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides an electrode manufacturing method including a coating step of coating active material layers by applying an active material slurry to both surfaces of a foil with a predetermined first width, which is unwound and travels from a foil roll, each active material layer being coated on a region of the foil excluding a non-coated region with a predetermined second width, which extends along one end portion in a width direction of the foil.

According to the present invention, in the coating step, the coating of the active material layers is performed by a slot die moving relatively with respect to the foil along a width direction and discharging the active material slurry.

According to the present invention, the sliding does not occur in the end portion of the active material layer alongside the non-coated region, thereby enabling the strengthened adhesion between the electrode and the separator, the stable charge and discharge performance, and the lowered risk of short circuit.

According to an embodiment, the active material slurry is discharged when the slot die moves relatively in a first width direction, and the active material slurry is not discharged when the slot die moves relatively in a second width direction. That is, the slot die may be moved reciprocally and relatively with respect to the foil in both width directions, and, however, the discharge of the active material slurry may be performed only in one direction.

According to a modified embodiment, the active material slurry may be discharged when the slot die moves both in a first width direction and in a second width direction. That is, the slot die may move reciprocally and relatively with respect to the foil in both width directions, and it may also perform the discharge of the active material slurry in both directions.

The electrode manufacturing method according to the present invention may further include a slitting step of cutting the foil, after the coating step, along cutting lines, which extend along a width direction at a first length interval, to form an electrode. In this case, it is preferable that the discharge slit of the slot die is extended by a second length equal to or greater than the first length. If the second length is shorter than the first length, a sliding portion may be located between a pair of cutting lines neighboring each other, and, thus, this can be prevented by making the second length greater than the first length.

Specifically, it is preferable that the second length is equal to or greater than twice the first length. In this case, from a region which has been coated one time by the slot die, two or more electrodes having no sliding portion can be obtained.

According to one embodiment, in the slitting step, it is preferable that the cutting line is located in a region where the active material layer is coated continuously in both directions in its length direction. In this case, both end portions in the length direction of the electrode can be formed flatly without the sliding phenomenon, thus being capable of improving the adhesion with the separator, achieving more stable charge and discharge performance, and preventing short circuits.

The electrode manufacturing method according to the present invention may further include a rolling step of rolling and flattening the foil in a thickness direction of the foil after the coating step.

According to one embodiment, in the coating step, in at least a partial region extending along a width direction on each of the both surfaces of the foil, an overlap portion may be formed in which the active material layer is coated in two or more layers.

Specifically, the overlap portion may be formed by the first coating portion and the immediately following second coating portion of the slot die overlapping each other by a predetermined length.

According to one embodiment, the overlap portion can be formed thicker than the remaining portion of the active material layer, and thus can be flattened in the rolling step. Thereby, the active material layer can be formed to be flat continuously along the length direction without the non-uniformity phenomenon of the rolling caused by the sliding.

According to another embodiment, in the coating step, in at least a partial region extending along a width direction on each of the both surfaces of the foil, a raised portion may be formed in which the active material layer is coated thicker than a remaining portion.

The raised portion may be formed in a region corresponding to an end portion in a length direction of a discharge slit of the slot die. Because of this, even if the sliding occurs in the portions of the active material layer corresponding to the end portions in the length direction of the discharge slit, their thicknesses can be formed greater than that of the remaining portion of the active material layer. The raised portions thus formed to be thick can be flattened in the rolling step. Thereby, the active material layer can be formed to be flat continuously along the length direction without the non-uniformity phenomenon of the rolling caused by the sliding.

In the coating step according to one embodiment, in at least any one of both end portions in a width direction of the active material layer and along a length direction of the active material layer, a raised portion is formed in which the active material layer is coated thicker than its remaining portion. The raised portion may be formed by the slot die additionally discharging the active material slurry in a stationary state for a moment before it starts relative movement in the width direction with respect to the foil and/or after it completes the same.

For example, in the case where the slot die starts coating from the non-coated region side, the slot die may discharge the active material slurry for a predetermined time in a stationary state to form the raised portion, and then start the relative movement to perform the coating on the remaining region. Alternatively, after the slot die starts the relative movement from one end portion in the width direction of the foil to coat the active material layer, and reaches the boundary of the active material layer alongside the non-coated region, it may discharge the active material slurry for a moment in a stationary state to form the raised portion 113.

It is preferable that the raised portion is formed along the end portion of the active material layer alongside the non-coated region. Thereby, even if the sliding occurs in the end portion of the active material layer alongside the non-coated region, it may be formed to have a thickness greater than that of the remaining portion of the active material layer. The raised portion which has been formed thick in this manner can be flattened in the rolling step, and because of this, the adhesion between the electrode and the separator, the stability of charge and discharge performance, and the safety against short circuit can be improved.

Additionally, the present invention provides a slot die coating active material layers by applying an active material slurry to both surfaces of a foil with a predetermined width, which is unwound and travels from a foil roll, wherein the slot die includes a discharge slit from which the active material slurry is discharged, and which extends in a length direction.

It may be configured to discharge the active material slurry while moving relatively with respect to the foil along a width direction. The electrode manufacturing method according to the one embodiment may be performed using the slot die configured as described above.

At both end portions in a length direction of the discharge slit, expansion portions are formed, respectively, each expansion portion having a greater width than a remaining portion. The electrode manufacturing method according to said another embodiment may be performed using the slot die having the expanded portions as described above. Specifically, the expanded portion has a greater width and forms a greater discharge cross-sectional area per unit length, so that the active material slurry can be discharged at a greater flow rate even under the same pressure as in the remaining portion. Thereby, the thickness of the active material layer in the region corresponding to the expanded portion becomes relatively greater, and, in portions of the active material layer corresponding to the end portions in the length direction of the discharge slit, raised portions may be formed which have a thickness greater than that of the remaining portion.

Additionally, the present invention provides an electrode structure as a result of performing the electrode manufacturing method, the electrode including: a foil; active material layers coated on both surfaces of the foil; a non-coated region extending along an end portion in a width direction of the foil in a length direction, and having no active material layer coated thereon; and an insulating layer including a cover portion covering the active material layer and an attachment portion attached to the non-coated region.

According to the present invention, the cover portion may include an arch portion having an arch shape convex toward the non-coated region. The arch portion may be formed by the electrode being rolled, which is in such a state that the raised portion has been formed in the end portion of the active material layer alongside the non-coated region, and that the cover portion has covered the raised portion. More specifically, in a state where an inner end portion of the attachment portion is firmly attached to the foil, as the raised portion is rolled to protrude in the horizontal direction, the cover portion also forms the arch portion protruding toward the non-coated region.

According to the present invention, it is possible to provide a structure of an electrode capable of preventing the instability of charge and discharge performance resulting from non-uniformity of the active material layer, and the risk of short circuit or the insufficient adhesion between the electrode and the separator caused by the sliding of the end portion of the active material layer formed flatly.

### [ADVANTAGEOUS EFFECTS]

According to the present invention, by not allowing a sliding portion to be formed, or by forming an overlap portion and/or a raised portion, or by slitting a middle portion of the coating portion, it is possible to provide an electrode structure and a method of manufacturing the same, in which the thickness and coating surface area of the active material layer are uniform, thereby achieving stable charge and discharge performance.

The present invention also provides an electrode manufacturing method in which the non-uniformity of the rolling resulting from a sliding phenomenon is prevented by making thicker the portion where the sliding may occur and then rolling this portion.

Another advantage of the slot die, the electrode manufacturing method, and/or the electrode manufactured using the same, according to the present invention, is that, due to the uniform thickness of the active material layer, the adhesion between the separator and the electrode is improved and short circuits are prevented.

Besides, the present invention may have various other effects, and some of them will be described in respective embodiments, while the description may be omitted for effects that can be easily inferred by those skilled in the art.

### [BRIEF DESCRIPTION OF DRAWINGS]

FIG. 1 illustrates a state in which a slot die coats an active material layer on a foil.
FIG. 2 illustrates an electrode formed by slitting the foil of FIG. 1.
FIG. 3 is a cross-sectional view showing an enlarged view of the end portion of the active material layer alongside the non-coated region in the electrode of FIG. 2.
FIG. 4 shows an electrode manufacturing method according to one embodiment.
FIG. 5 shows a coating step according to one embodiment.
FIG. 6 shows a coating step according to a modified embodiment.
FIG. 7 shows a cross-section of an overlap portion according to one embodiment.
FIGs. 8 and 9 show a state in which the overlap portion is flattened in the rolling step according to one embodiment.
FIG. 10 shows the coating step according to another embodiment.
FIG. 11 shows a cross-sectional view of a raised portion according to another embodiment.
FIGS. 12 and 13 show that the raised portion is flattened in a rolling step according to another embodiment.
FIG. 14 illustrates a slitting step according to one embodiment.
FIG. 15 illustrates an electrode not coated with an insulating layer according to one embodiment.
FIGS. 16 and 17 respectively show states before and after performing the rolling step on the electrode of FIG. 15.
FIG. 18 illustrates an electrode coated with an insulating layer according to one embodiment.
FIGS. 19 and 20 respectively show states before and after performing the rolling step on the electrode of FIG. 18.

### [DESCRIPTION OF REFERENCE NUMERALS]

1: electrode 10: foil 100: foil roll 11: active material layer 110: sliding portion 111: overlap portion 112: raised portion 113: raised portion 11a: first coating portion 11b: second coating portion3 12: non-coated region 13: insulating layer 130: attachment portion 131: cover portion 132: arch portion 2: slot die 20: discharge slit 200: expanded portion 3: rolling roller 4: cutting line W1~2: first width~second width L1~2: first length~second length RD: traveling direction

### [DETAILED DESCRIPTION OF THE PREFERRED EMBODIMENTS]

The purposes, features and advantages described above will be described in detail below with reference to the accompanying drawings, so that a person having ordinary knowledge in the technical field to which the present invention pertains can easily practice the technical idea of the present invention. In describing the present invention, if it is determined that a detailed description of a known technology related to the present invention may unnecessarily obscure the gist of the present invention, the detailed description thereof will be omitted. Hereinafter, preferred embodiments of the present invention will be described in detail with reference to the accompanying drawings. In the drawings, like reference numerals are used to refer to like or similar components.

Although the terms "first", "second", and so on are used to describe various components, it is obvious that these components are not limited by these terms. These terms are merely used to distinguish one component from another component, and it is obvious that, unless specifically stated to the contrary, a first component may also be a second component.

Throughout the specification, unless specifically stated to the contrary, each element may be singular or plural.

Hereinafter, the phrase "any configuration is disposed in the upper side of or in the lower side of a component" or "on or below a component" may mean not only that any configuration is disposed in contact with the upper surface or lower surface of said component, but also that another configuration may be interposed between said component and any configuration disposed on or below said component.

Additionally, if a component is described as being "connected," "coupled," or "contacted" to another component, the components may be directly connected or contacted to one another, but it is to be understood that still another element may be "interposed" between the components, or that the components may be "connected," "coupled," or "contacted" to each other through still another element.

As used herein, singular expressions include plural expressions unless the context clearly dictates otherwise. Herein, the terms "be comprised of" or "comprise" should not be construed to necessarily include all of the various components or various steps described in the specification, and should be construed to mean that some of the components or some of the steps may not be included, or that additional components or steps may be included.

Throughout the disclosure, the phrase "A and/or B" means A, B, or A and B, unless otherwise specified, and the phrase "C to D" means equal to or greater than C and equal to or smaller than D unless otherwise specified.

Hereinafter, preferred embodiments of the present invention will be described with reference to the accompanying drawings.

FIG. 4 shows an electrode manufacturing method according to one embodiment. Referring to this, the electrode manufacturing method according to one embodiment of the present invention includes a coating step S1 in which a slot die coats an active material layer on a foil, a rolling step S2 in which a rolling roller rolls the foil coated with the active material layer, and a slitting step S3 in which the rolled foil is slit at predetermined length intervals. Hereinafter, the process executed in each step, the equipment used therein, and the structure of the electrode as the resulting product will be described in detail.

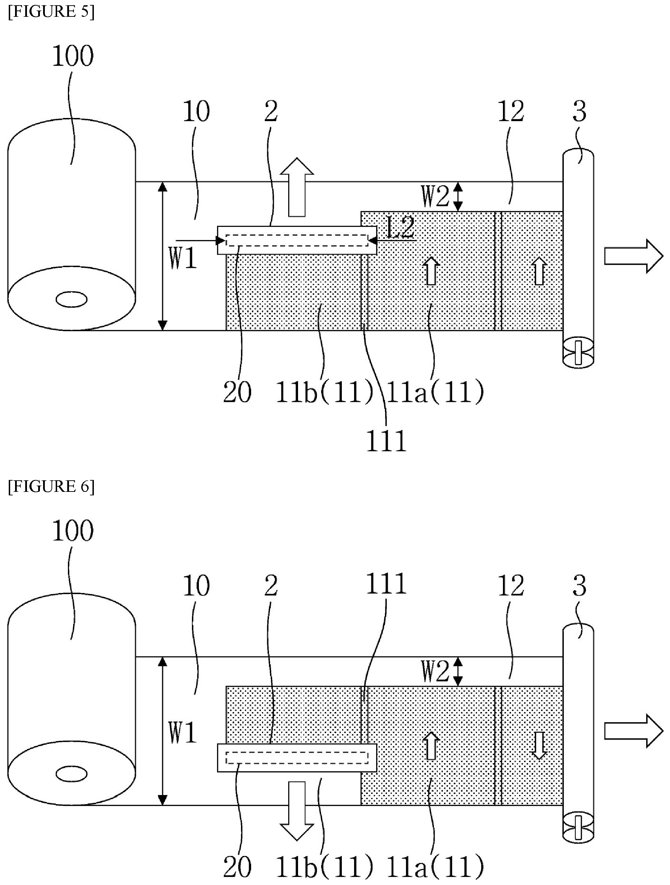

FIG. 5 shows a coating step according to one embodiment. Referring to this, the coating step S1 is performed by the slot die 2 discharging active material slurry onto the foil 10, which is unwound and continuously supplied from a foil roll 100 to travel in its length direction. The slot die 2 includes a discharge slit 20 through which the active material slurry is discharged and coated onto the surface of the foil 10.

The foil 10 may have a first width W1. In this case, on the foil 10, a non-coated region 12 is formed which extends in a second width W2 and is not coated with the active material layer 11. The non-coated region 12 may later undergo a notching process to form a tab for connecting an electrode assembly to the outside.

The slot die 2 has a shape extending in the length direction, or the traveling direction of the foil 10, and the discharge slit 20 also has a shape like this. The slot die 2 is configured to be moved in the width direction reciprocally and relatively with respect to the foil 10. In this case, the slot die 2 is relatively moved in the width direction along the surface of the foil 10, and coats the active material layer 11 on the foil 10 by discharging the active material slurry through the discharge slit 20.

According to one embodiment, the slot die 2 is configured to be moved reciprocally in a first width direction and a second width direction opposite thereto with respect to the foil 10. In this case, the slot die 2 is configured to discharge the active material slurry when moving in the first width direction, and not to discharge the active material slurry when moving in the second width direction, so that the coating of the active material layer 11 can be performed in only one direction, thereby achieving high coating consistency.

FIG. 6 shows a coating step according to a modified embodiment. Referring to this, the slot die 2 according to the modified embodiment may discharge the active material slurry when moving in both the first width direction and the second width direction. That is, the slot die 2 may move reciprocally and relatively with respect to the foil 10 in both width directions, and may also perform the discharge of the active material slurry in both directions. This is more desirable in terms of process speed and efficiency because this can increase the movement efficiency of the slot die 2, thereby allowing the traveling speed of the foil 10 to be increased.

According to the present invention, as the slot die 2 coats the active material layer 11 along the width direction of the foil 10, the sliding phenomenon of the active material layer 11 also mainly occurs at its end portions in the length direction of the coating portion, and, however, occurs to a lesser extent at its end portion in a side of the non-coated region.

Referring back to FIG. 5, in the rolling step S2, the foil 10 on which the active material layer 11 has been coated by the slot die 2 passes through the rolling roller 3 to be rolled and flattened in the thickness direction.

The rolling roller 3 according to the present embodiment may be a pair of rollers spaced apart in the thickness direction so as to contact both surfaces of the foil 10, and be configured to press the foil 10 and the active material layer 11 in the thickness direction, and however, as long as the rolling and flattening actions can be performed, even if it has another form, such as a vertically moving press, it is acceptable regardless of its name.

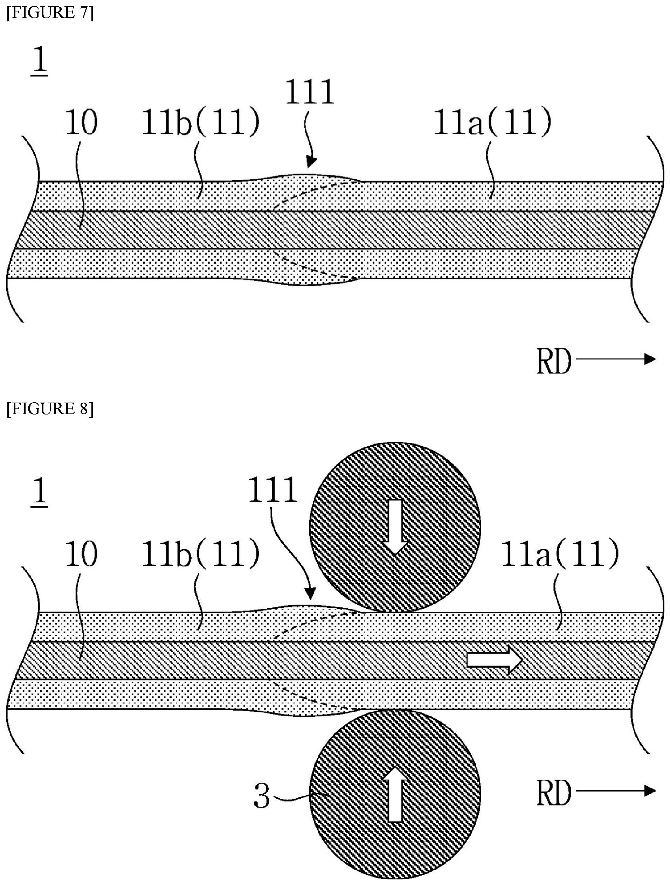

FIG. 7 shows a cross-section of an overlap portion according to one embodiment. Referring back to FIG. 5 together with this, in the coating step S1 according to one embodiment, an overlap portion 111, in which the active material layer 11 is coated in two or more layers, may be formed in at least a partial region on each of both surfaces of the foil 10, which extends in the width direction.

Specifically, the overlap portion 111 may be formed by the first coating portion 11a and the immediately following second coating portion 11b of the slot die 2 overlapping each other by a predetermined length.

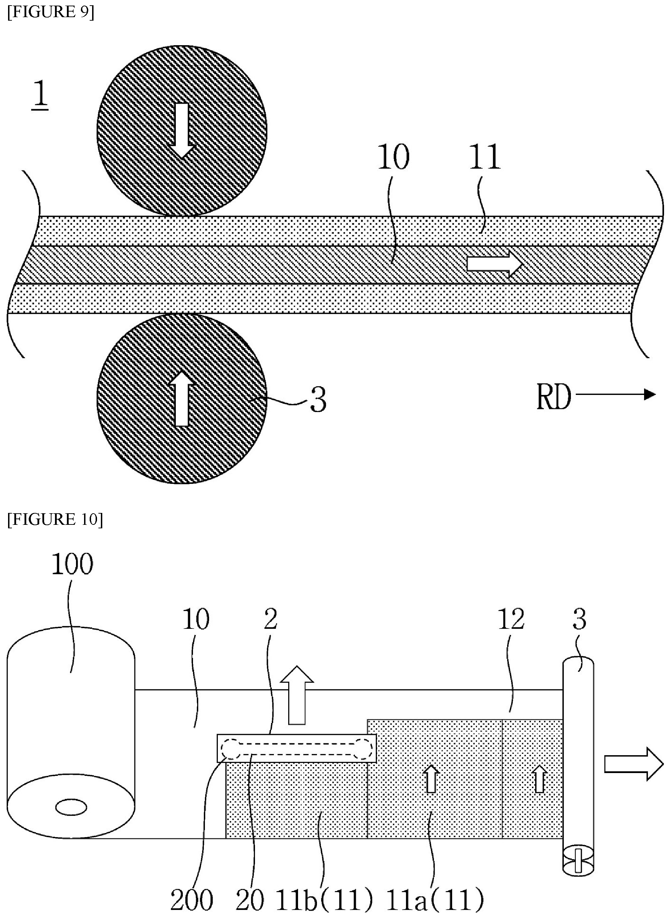

FIGS.8 and 9 show a state in which the overlap portion is flattened in the rolling step according to one embodiment. According to these drawings, the overlap portion 111 is formed thicker than the remaining portion of the active material layer 11, and thus can be flattened in the rolling step S2. Thereby, the active material layer 11 can be formed to be flat continuously along the length direction without the non-uniformity phenomenon of the rolling caused by the sliding.

FIG. 10 shows the coating step according to another embodiment. Referring to this, at both end portions in the length direction of the discharge slit 20 according to another embodiment, expanded portions 200 may be formed, respectively, each having a greater width than the remaining portion.

The electrode manufacturing method according to said another embodiment may be performed using the slot die 2 having the expanded portions 200 as described above. Specifically, the expanded portion 200 has a greater width and forms a greater discharge cross-sectional area per unit length, so that the active material slurry can be discharged at a greater flow rate even under the same pressure as in the remaining portion. Thereby, the thickness of the active material layer 11 in the region corresponding to the expanded portion 200 becomes relatively greater, and, in portions of the active material layer 11 corresponding to the end portions in the length direction of the discharge slit 20, raised portions 112 may be formed which have a thickness greater than that of the remaining portion.

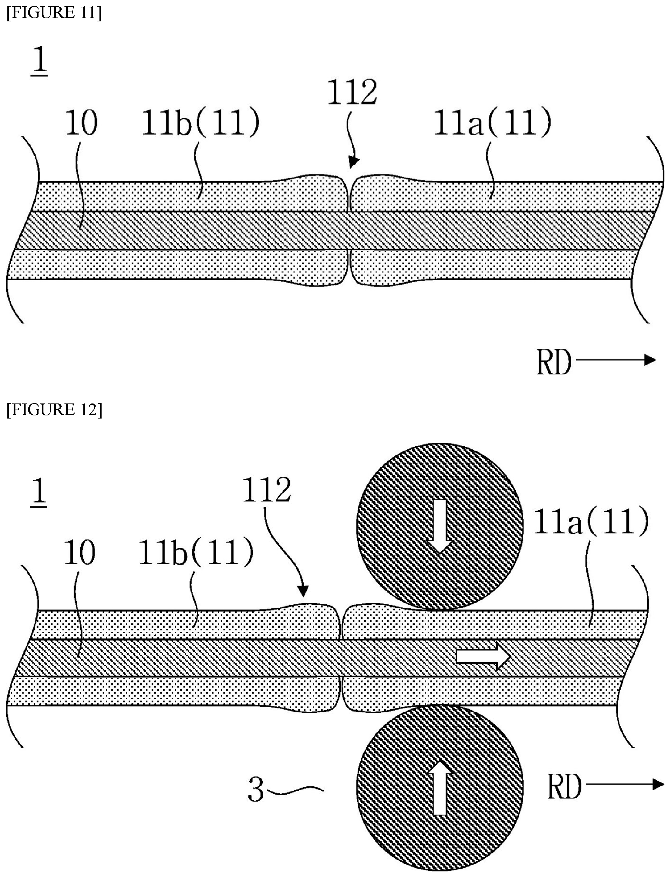

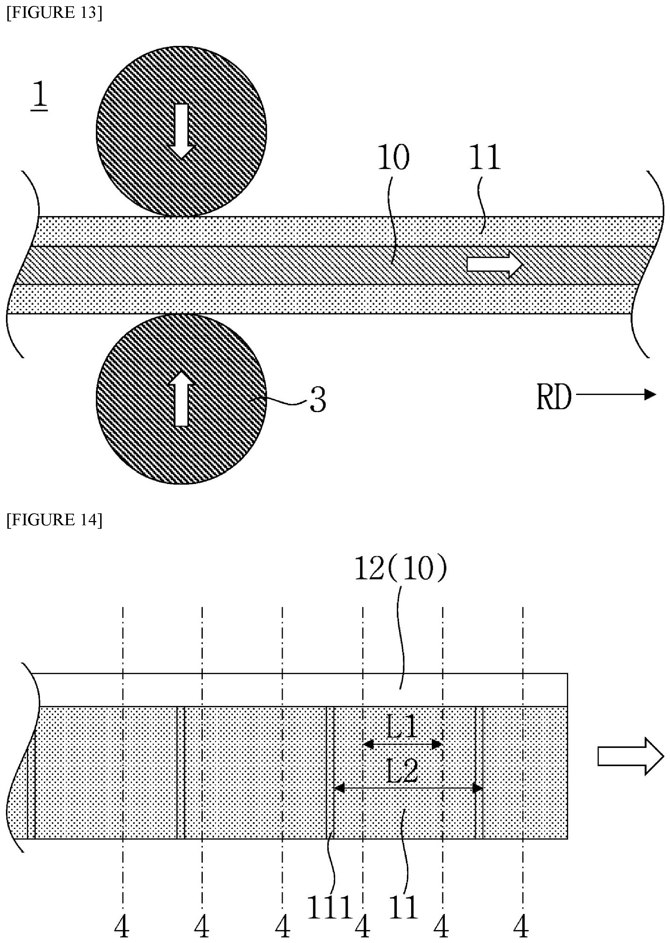

FIG. 11 shows a cross-sectional view of the raised portion according to another embodiment, and FIGS. 12 and 13 show a state in which the raised portion is flattened in the rolling step according to another embodiment. Referring to these drawings, the raised portions 112 may be formed in portions corresponding to the end portions in the length direction of the discharge slit 20 of the slot die 2. Because of this, even if the sliding occurs in the portions of the active material layer 11 corresponding to the end portions in the length direction of the discharge slit 20, their thicknesses can be formed greater than that of the remaining portion of the active material layer 11. The raised portions 112 thus formed to be thick can be flattened in the rolling step S2. Thereby, the active material layer 11 can be formed to be flat continuously along the length direction without the non-uniformity phenomenon of the rolling caused by the sliding.

Specifically, the raised portions 112 may be respectively formed at one end portion in the length direction of the first coating portion 11a and at the other end portion in the length direction, adjacent to the one end portion in the length direction, of the second coating portion 11b coated immediately after the first coating portion 11a. In this case, while undergoing the rolling step S2, the pair of raised portions 112 formed at the one end portion in the length direction and the other end portion in the length direction may be joined together to fill the gap between the first coating portion 11a and the second coating portion 11b in a flat manner.

FIG. 14 illustrates a slitting step according to one embodiment. Referring to this, the foil 10 which has undergone the rolling step S2 undergoes a slitting step S3 in which it is cut along a width direction at predetermined length intervals. As the slitting step S3 is performed, the foil 10 is divided into a plurality of electrodes.

According to one embodiment, in the slitting step S3, the foil 10 may be cut along cutting lines 4 extending along the width direction at intervals of a first length L1.

In this case, it is preferable that the discharge slit 20 of the slot die 2 is extended by a second length L2 equal to or greater than the first length L1. If the second length L2 is shorter than the first length L1, a sliding portion may be located between a pair of cutting lines 4 neighboring each other, and, thus, this can be prevented by making the second length L2 greater than the first length L1.

Specifically, it is preferable that the second length L2 is equal to or greater than twice the first length L1. In this case, from a region which has been coated one time by the slot die 2, two or more electrodes 1 having no sliding portion can be obtained.

According to one embodiment, in the slitting step S3, it is preferable that the cutting line 4 is located in a region where the active material layer 11 is coated continuously in both directions in its length direction. In this case, both end portions in the length direction of the electrode 1 can be formed flatly without the sliding phenomenon, thus being capable of improving the adhesion with the separator, achieving more stable charge and discharge performance, and preventing short circuits.

The electrode may be a positive electrode or a negative electrode. When the electrodes are stacked to form an electrode assembly, the positive electrode and the negative electrode may be alternately and repeatedly stacked with a separator interposed therebetween. An electrode not coated with an insulating layer and an electrode coated with an insulating layer, which will be described below, may correspond respectively to one of the positive electrode and the negative electrode, which is relatively not vulnerable to short circuit, and the other one thereof, which is relatively vulnerable to short circuit.

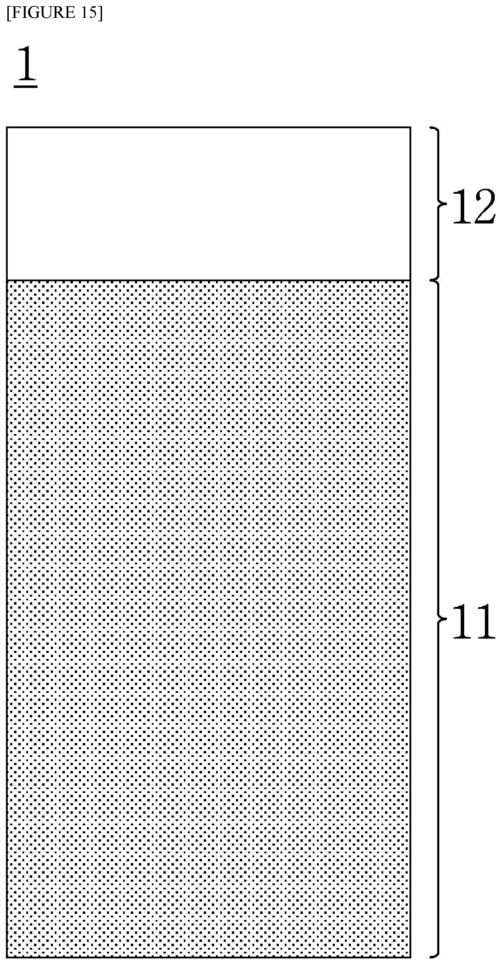

FIG. 15 illustrates an electrode not coated with an insulating layer according to one embodiment. Referring to this, on the electrode 1, a separate insulating layer may not be coated. In this case, the electrode 1 includes the active material layer 11 and the non-coated region 12 on which the active material layer 11 is not coated.

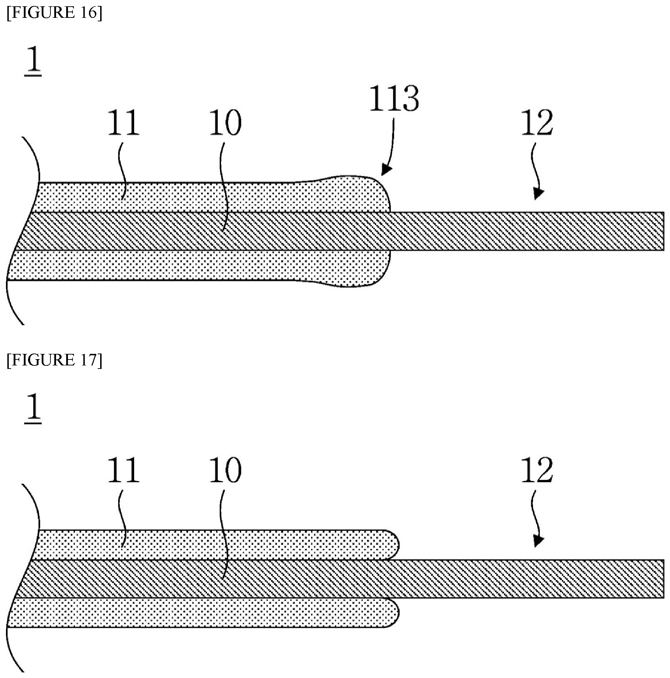

FIGS. 16 and 17 respectively illustrate the electrode of FIG. 15 in a foil state before and after undergoing a rolling step. Referring to these figures, in the coating step S1 according to one embodiment, in at least any one of both end portions in the width direction of the active material layer 11 and along the length direction, a raised portion 113 may be formed in which the active material layer 11 is coated thicker than its remaining portion. The raised portion 113 may be formed by the slot die 2 additionally discharging the active material slurry in a stationary state for a moment before it starts relative movement in the width direction with respect to the foil 10 and/or after it completes the same.

For example, in the case where the slot die 2 starts coating from the non-coated region side, the slot die 2 may discharge the active material slurry for a predetermined time in a stationary state to form the raised portion 113, and then start the relative movement to perform the coating on the remaining region. Alternatively, after the slot die 2 starts the relative movement from one end portion in the width direction of the foil 10 to coat the active material layer 11, and reaches the boundary of the active material layer 11 alongside the non-coated region, it may discharge the active material slurry for a moment in a stationary state to form the raised portion 113.

It is preferable that the raised portion 113 is formed along the end portion of the active material layer 11 alongside the non-coated region 12. Thereby, even if the sliding occurs in the end portion of the active material layer 11 alongside the non-coated region, it may be formed to have a thickness greater than that of the remaining portion of the active material layer 11. The raised portion 113 which has been formed thick in this manner can be flattened in the rolling step S2, and because of this, the adhesion between the electrode and the separator, the stability of charge and discharge performance, and the safety against short circuit can be improved.

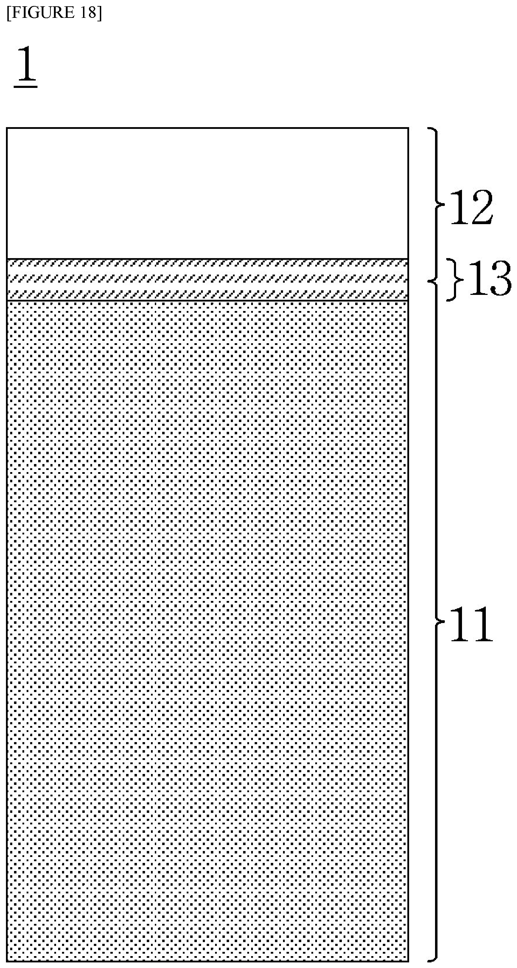

FIG. 18 illustrates an electrode coated with an insulating layer according to one embodiment. Referring to this, the electrode 1 may include an insulating layer 13 coated along the boundary between the active material layer 11 and the non-coated region 12.

The insulating layer 13 may include a cover portion 131 covering the active material layer 11, and an attachment portion 130 attached to the non-coated region 12.

As the insulating layer 13 is provided, the active material layer 11 can be prevented from being exposed through the space between a pair of separators interposing the electrode 1, and the risk of short-circuiting can be reduced. Thus, the insulating layer 13 may be prepared on one among the positive electrode and the negative electrode, which is more vulnerable to short circuit. However, it is of course also possible that the insulating layer 13 is prepared on both the positive electrode and the negative electrode.

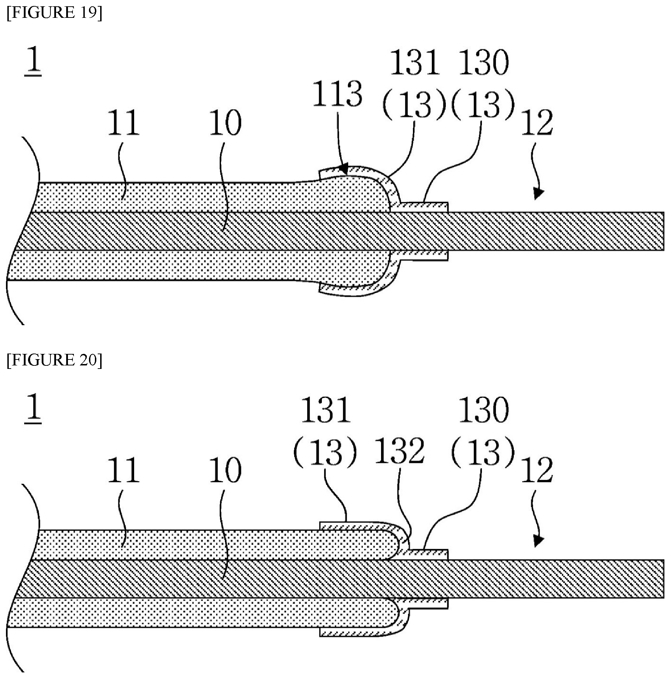

FIGS. 19 and 20 respectively illustrate the electrode of FIG. 18 in a foil state before and after undergoing a rolling step. Referring to these drawings,

According to one embodiment, the cover portion 131 may include an arch portion 132 having an arch shape convex toward the non-coated region. The arch portion 132 may be formed by the electrode 1 being rolled, which is in such a state that the raised portion 113 has been formed in the end portion of the active material layer 11 alongside the non-coated region, and that the cover portion 131 has covered the raised portion 113. More specifically, in a state where an inner end portion of the attachment portion 130 is firmly attached to the foil 10, as the raised portion 113 is rolled to protrude in the horizontal direction, the cover portion 131 also forms the arch portion 132 protruding toward the non-coated region.

According to one embodiment, it is possible to provide a structure of an electrode capable of preventing the instability of charge and discharge performance resulting from non-uniformity of the active material layer, and the risk of short circuit or the insufficient adhesion between the electrode and the separator caused by the sliding of the end portion of the active material layer formed flatly.

The foregoing embodiments should be construed as illustrative in all respects and not as restrictive, and the scope of the present invention will be indicated by the claims to be described below rather than by the foregoing detailed description. And the meaning and scope of the claims to be described below, as well as all modifications and variations derived from the equivalent concept, should be interpreted as being included within the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing one embodiment of the present invention, it should be appreciated that predictable effects are also to be recognized by the configuration.

## Claims

1. A electrode manufacturing method comprising:
a coating step of coating active material layers by applying an active material slurry to both surfaces of a foil with a predetermined first width, which is unwound and travels from a foil roll, each active material layer being coated on a region of the foil excluding a non-coated region with a predetermined second width, which extends along one end portion in a width direction of the foil,
wherein in the coating step, the coating of the active material layers is performed by a slot die moving relatively with respect to the foil along a width direction and discharging the active material slurry.

2. The electrode manufacturing method of claim 1, wherein the active material slurry is discharged when the slot die moves relatively in a first width direction, and the active material slurry is not discharged when the slot die moves relatively in a second width direction.

3. The electrode manufacturing method of claim 1, wherein the active material slurry is discharged when the slot die moves both in a first width direction and in a second width direction.

4. The electrode manufacturing method of claim 1, further comprising:
a slitting step of cutting the foil, after the coating step, along cutting lines, which extend along a width direction at a first length interval, to form an electrode,
wherein a discharge slit of the slot die is extended by a second length equal to or greater than the first length.

5. The electrode manufacturing method of claim 4, wherein the second length is equal to or greater than twice the first length.

6. The electrode manufacturing method of claim 4, wherein in the slitting step, the cutting line is located in a region where the active material layer is coated continuously in both directions in its length direction.

7. The electrode manufacturing method of claim 1, further comprising:
a rolling step of rolling and flattening the foil in a thickness direction of the foil after the coating step.

8. The electrode manufacturing method of claim 7, wherein in the coating step, in at least a partial region extending along a width direction on each of the both surfaces of the foil, an overlap portion is formed in which the active material layer is coated in two or more layers.

9. The electrode manufacturing method of claim 8, wherein the overlap portion is formed by a first coating portion and a immediately following second coating portion of the slot die overlapping each other by a predetermined length.

10. The electrode manufacturing method of claim 7, wherein in the coating step, in at least a partial region extending along a width direction on each of the both surfaces of the foil, a raised portion is formed in which the active material layer is coated thicker than a remaining portion of the active material layer.

11. The electrode manufacturing method of claim 10, wherein the raised portion is formed in a region corresponding to an end portion in a length direction of a discharge slit of the slot die.

12. The electrode manufacturing method of claim 7, wherein in the coating step, in at least any one of both end portions in a width direction of the active material layer and along a length direction of the active material layer, a raised portion is formed in which the active material layer is coated thicker than a remaining portion of the active material layer.

13. The electrode manufacturing method of claim 12, wherein the raised portion is formed along the end portion of the active material layer, which is in a side of the non-coated region.

14. A slot die coating active material layers by applying an active material slurry to both surfaces of a foil with a predetermined width, which is unwound and travels from a foil roll, the slot die comprising:
a discharge slit from which the active material slurry is discharged, and which extends in a length direction,
wherein the slot die is configured to discharge the active material slurry while moving relatively with respect to the foil along a width direction.

15. The slot die of claim 14, wherein at both end portions in a length direction of the discharge slit, expansion portions are formed, respectively, each expansion portion having a greater width than a remaining portion of the discharge slit.

16. An electrode comprising:
a foil;
active material layers coated on both surfaces of the foil;
a non-coated region extending along an end portion in a width direction of the foil in a length direction, and having no active material layer coated thereon; and
an insulating layer including a cover portion covering the active material layer and an attachment portion attached to the non-coated region,
wherein the cover portion includes an arch portion having an arch shape convex toward a non-coated region.
